# EUROPÄISCHE PATENTANMELDUNG

(11) **EP 4 122 692 A1**
(43) Veröffentlichungstag der Anmeldung: **25.01.2023**
(21) Anmeldenummer: 21187068.8
(22) Anmeldetag: 21.07.2021
(51) Int. Cl.: B32B 1/08, B32B 27/08, C08L 23/06, C08L 23/08

(54) **KUNSTSTOFFZUSAMMENSETZUNG, KUNSTSTOFFROHR, VERWENDUNG UND HERSTELLUNGSVERFAHREN**

(71) Anmelder: Fibron Pipe GesmbH, 4300 St. Valentin (AT)
(72) Erfinder: Andreas Kessler, 82049 Pullach im Isartal (DE)
(74) Vertreter: Ege Lee & Roider Patentanwälte

(57) **Zusammenfassung**

Zusammensetzung, insbesondere Kunststoffzusammensetzung, wie Polymermischung, umfassend zumindest ein Polyethylen mit hoher Dichte (HDPE) und zumindest ein Polyamid 66 (PA66) modifiziertes, insbesondere ultrahochmolekulares, Polyethylen, sowie Rohr (100, 102), wie Kunststoffrohr (100, 102), mit einer solchen Zusammensetzung und Herstellungsverfahren.

## Beschreibung

Die Erfindung betrifft eine Zusammensetzung, insbesondere Kunststoffzusammensetzung. Außerdem betrifft die Erfindung eine Verwendung von einer Zusammensetzung, insbesondere Kunststoffzusammensetzung. Ferner betrifft die Erfindung ein Rohr, insbesondere Kunststoffrohr, thermoplastisches Kunststoffrohr oder mehrschichtiges Rohr, sowie die Verwendung eines Rohrs. Des Weiteren betrifft die Erfindung ein Verfahren zur Herstellung einer Zusammensetzung sowie ein Verfahren zur Herstellung eines Rohrs.

Flexible thermoplastische Kompositrohre ("Thermoplastic Composite Pipes", TCP) kommen oft bei der Förderung und beim Transport von Öl bzw. Öl-Wasser-gemischen oder von Gas zum Einsatz. Thermoplastische Kompositrohre weisen üblicherweise eine Innenlage aus ein- oder mehrschichtigen Innenliner aus thermoplastischem Material auf. Auf diese wird eine Kompositlage, zum Beispiel durch Aufwickeln faserverstärkter Tapes, aufgebracht. Derartige Kompositrohre sind beispielsweise aus dem Dokument WO 95/07428 A1 oder WO 2017/048117 A1 bekannt.

Beim Transport von Öl-Wasser-Gemischen können jedoch Partikel, wie Sand bzw. Sandstein, enthalten sein. Insbesondere beim Vorhandensein von mechanischen Anteilen / Partikel, wie Sand, von über 0,1 % im transportierenden Medium erfolgt ein signifikanter Abrieb der inneren Schicht des Innenrohrs. Je nach Konzentration dieser Partikel wären daher Rohre, insbesondere Liner-Rohre (inneres Rohr des TCP), mit erhöhter Abriebfestigkeit wünschenswert.

Der Erfindung liegt die Aufgabe zugrunde, eine eingangs genannte Zusammensetzung strukturell und/oder funktionell zu verbessern. Außerdem liegt der Erfindung die Aufgabe zugrunde, ein eingangs genanntes Rohr strukturell und/oder funktionell zu verbessern. Ferner liegt der Erfindung die Aufgabe zugrunde, eine eingangs genannte Verwendung und Verfahren funktionell zu verbessern.

Die Aufgabe wird gelöst mit einer Zusammensetzung mit den Merkmalen des Anspruchs 1. Außerdem wird die Aufgabe gelöst mit einer Verwendung mit den Merkmalen des Anspruchs 6, 7 oder 13. Ferner wird die Aufgabe gelöst mit einem Rohr mit den Merkmalen des Anspruchs 8, 9 oder 11. Des Weiteren wird die Aufgabe gelöst mit einem Verfahren mit den Merkmalen des Anspruchs 14 oder 15. Vorteilhafte Ausführungen und/oder Weiterbildungen sind Gegenstand der Unteransprüche.

Eine Zusammensetzung kann eine Kunststoffzusammensetzung sein und/oder aufweisen. Die Zusammensetzung kann eine Polymermischung sein und/oder aufweisen. Die Zusammensetzung kann zumindest ein Polyethylen mit hoher Dichte (HDPE) aufweisen. Die Zusammensetzung kann zumindest ein Polyamid 66 (PA66) modifiziertes Polyethylen aufweisen. Die Zusammensetzung kann zumindest ein Polyethylen mit hoher Dichte (HDPE) und zumindest ein Polyamid 66 (PA66) modifiziertes Polyethylen aufweisen.

Das Polyethylen mit hoher Dichte kann ein auf einem 1-Hexen Copolymer basieren und/oder dieses aufweisen. Das Polyethylen mit hoher Dichte kann auf einer bimodale Molekulargewichtsverteilung basieren und/oder eine bimodale Molekulargewichtsverteilung aufweisen.

Das Polyamid 66 modifizierte Polyethylen kann ein ultrahochmolekulares Polyethylen sein. Das Polyamid 66 modifizierte Polyethylen kann ein Additiv sein. Die Zusammensetzung kann zumindest ein Polyethylen mit hoher Dichte (HDPE) und zumindest ein Polyamid 66 (PA66) modifiziertes, ultrahochmolekulares Polyethylen aufweisen.

Die Zusammensetzung kann 2 bis 10 %, wie Gewichts-%, Polyamid 66 modifiziertes Polyethylen aufweisen. Die Zusammensetzung kann 3 bis 4 Gewichts-% Polyamid 66 modifiziertes Polyethylen aufweisen. Die Zusammensetzung kann 6 bis 7 Gewichts-% Polyamid 66 modifiziertes Polyethylen aufweisen. Die Zusammensetzung kann 7 bis 10 Gewichts-% Polyamid 66 modifiziertes Polyethylen aufweisen. Die % bzw. Gewichts-% können sich auf 100% der Zusammensetzung beziehen.

Die Zusammensetzung kann 90 bis 98 %, wie Gewichts-%, Polyethylen mit hoher Dichte aufweisen. Die Zusammensetzung kann 96 bis 97 Gewichts-% Polyethylen mit hoher Dichte aufweisen. Die Zusammensetzung kann 93 bis 94 Gewichts-% Polyethylen mit hoher Dichte aufweisen. Die Zusammensetzung kann 90 bis 93 Gewichts-% Polyethylen mit hoher Dichte aufweisen. Die % bzw. Gewichts-% können sich auf 100% der Zusammensetzung beziehen.

Die Zusammensetzung kann 2 bis 10 Teile, wie Gewichtsteile, Polyamid 66 modifiziertes Polyethylen aufweisen. Die Zusammensetzung kann 3 bis 4 Gewichtsteile Polyamid 66 modifiziertes Polyethylen aufweisen. Die Zusammensetzung kann 6 bis 7 Gewichtsteile Polyamid 66 modifiziertes Polyethylen aufweisen. Die Zusammensetzung kann 7 bis 10 Gewichtsteile Polyamid 66 modifiziertes Polyethylen aufweisen. Die Teile bzw. Gewichtsteile können sich auf das Gewicht, wie Gesamtgewicht, der Zusammensetzung beziehen.

Die Zusammensetzung kann 90 bis 98 Teile, wie Gewichtsteile, Polyethylen mit hoher Dichte aufweisen. Die Zusammensetzung kann 96 bis 97 Gewichtsteile Polyethylen mit hoher Dichte aufweisen. Die Zusammensetzung kann 93 bis 94 Gewichtsteile Polyethylen mit hoher Dichte aufweisen. Die Zusammensetzung kann 90 bis 93 Gewichtsteile Polyethylen mit hoher Dichte aufweisen. Die Teile bzw. Gewichtsteile können sich auf das Gewicht, wie Gesamtgewicht, der Zusammensetzung beziehen.

Die Zusammensetzung und/oder das Polyethylen mit hoher Dichte kann eine Dichte von 0,93 bis 0,98 g/cm³ aufweisen.

Eine Verwendung von einer wie vorstehend und/oder nachfolgend beschriebenen Zusammensetzung kann zur Herstellung eines Rohrs, insbesondere Kunststoffrohrs, wie thermoplastisches Kunststoffrohr oder thermoplastisches Verbundrohr, sein und/oder dienen.

Eine Verwendung von einer wie vorstehend und/oder nachfolgend beschriebenen Zusammensetzung kann zur Herstellung eines Liners, wie Innenliner oder Innenrohr, für ein thermoplastisches Verbundrohr und/oder thermoplastisches Kompositrohr, sein und/oder dienen.

Ein Rohr, insbesondere Kunststoffrohr, wie thermoplastisches Kunststoffrohr, kann eine wie vorstehend und/oder nachfolgend beschriebene Zusammensetzung umfassen.

Ein thermoplastisches Kunststoffrohr, wie thermoplastisches Verbundrohr und/oder thermoplastisches Kompositrohr, kann ein Innenrohr, wie Liner oder Innenliner, umfassen. Das Innenrohr kann aus einer Formmasse, wie Kunststoffformmasse, hergestellt, beispielsweise extrudiert, sein. Die Formmasse kann eine wie vorstehend und/oder nachfolgend beschriebene Zusammensetzung aufweisen und/oder daraus hergestellt sein.

Das Thermoplastisches Kunststoffrohr kann eine um das Innenrohr herum angeordnete Verstärkungsschicht aufweisen. Die Verstärkungsschicht kann mindestens eine erste Lage aus verstärkendem Band, wie Faserband, aufweisen. Die zumindest eine erste Lage aus verstärkendem Band kann im Wesentlichen spiralförmig in einer ersten spiralförmigen Richtung um das Innenrohr gewickelt sein oder werden. Die Verstärkungsschicht kann mindestens eine zweite Lage aus verstärkendem Band, wie Faserband, aufweisen. Die zumindest eine zweite Lage aus verstärkendem Band kann im Wesentlichen spiralförmig um die zumindest eine erste Lage aus verstärkendem Band in einer zweiten spiralförmigen Richtung entgegen der ersten spiralförmigen Richtung gewickelt sein oder werden. Die zumindest eine erste Lage aus verstärkendem Band und/oder die zumindest eine zweite Lage aus verstärkendem Band kann ein verstärkendes Band umfassen, welches mit Kunststoff, wie Polyolefin, Polyethylen, Polyethylen mit hoher Dichte (HDPE), Polypropylen oder Polyamid, imprägnierte, beispielsweise unidirektional angeordnete, Fasern, wie Glasfasern und/oder Kunststofffasern und/oder Kohlefasern und/oder Aramidfasern, aufweist. Thermoplastisches Kunststoffrohr kann ein Mediumrohr sein. Das Innenrohr, wie Liner oder Innenliner, kann das Innenrohr des Mediumrohrs sein.

Ein Mehrschichtiges Rohr, insbesondere Kunststoffrohr, wie Liner oder Innenliner, kann eine radial außen liegende Schicht, wie Außenschicht oder Außenlage, aufweisen. Die radial außen liegende Schicht kann ein Polyethylen mit hoher Dichte (HDPE), beispielsweise ein bimodales Polyethylen mit hoher Dichte, aufweisen und/oder daraus hergestellt, wie extrudiert, sein. Das mehrschichtige Rohr kann eine radial innen liegende Schicht, wie Innenschicht oder Innenlage, aufweisen. Die radial innen liegende Schicht kann eine wie vorstehend und/oder nachfolgend beschriebene Zusammensetzung aufweisen und/oder daraus hergestellt, wie extrudiert, sein. Das Mehrschichtige Rohr kann beispielsweise zwei, drei, vier oder mehr Schichten und/oder Lagen aufweisen.

Das Rohr, wie Mediumrohr, mehrschichtiges Rohr, Innenrohr, Liner oder Innenliner, kann zum Transport von unterschiedlichen Medien, wie beispielsweise flüssige oder gasförmige Medien, wie Wasser, Öl, zum Beispiel Rohöl, oder Gas, zum Beispiel, Rohgas, dienen und/oder ausgebildet sein.

Bei den vorstehend und/oder nachfolgend beschriebenen Rohren kann die Zusammensetzung und/oder das Polyamid 66 modifizierte Polyethylen als Tribologiemodifikator fungieren.

Die vorstehend und/oder nachfolgend beschriebenen Rohre können mittels eines Extrusionsverfahrens hergestellt bzw. extrudiert sein oder werden. Beispielsweise können die vorstehend und/oder nachfolgend beschriebenen Rohre mittels eines Ko-Extrusionsverfahrens hergestellt bzw. koextrudiert sein oder werden.

Die vorstehend und/oder nachfolgend beschriebenen Rohre können Vollwandrohre oder Mehrschichtrohre bzw. mehrlagige Rohre sein. Die vorstehend und/oder nachfolgend beschriebenen Rohre können ein vernetztes Polyethylen und/oder Engineering Polymere, wie TPE/TPU, PVDF oder PPS Typen, aufweisen und/oder daraus hergestellt sein.

Die vorstehend und/oder nachfolgend beschriebenen Rohre können als flexible und/oder wickelbare und/oder nichtmetallische und/oder thermoplastische Verbundrohre ("thermoplastic composite pipe", TCP) ausgebildet sein oder werden.

Eine Verwendung eines vorstehend und/oder nachfolgend beschriebenen Rohrs kann für den Transport von Öl, wie Rohöl, Gas, wie Rohgas, oder Wasser sein und/oder dienen.

Ein Verfahren zur Herstellung einer wie vorstehend und/oder nachfolgend beschriebenen Zusammensetzung kann das Kneten, wie Schmelzkneten, der Zusammensetzung und/oder der Bestandteile der Zusammensetzung umfassen. Bei dem Verfahren kann die Zusammensetzung und/oder können die Bestandteile der Zusammensetzung jeweils einzeln oder zusammen, zum Beispiel als Vormischung, einer Knetvorrichtung, beispielsweise einem Extruder, wie Einschneckenextruder oder Doppelschneckenextruder, oder einer Ein- oder Doppelschneckenknetmaschine oder einem Mischer zugeführt werden.

Das Zuführen kann gravimetrisch oder volumetrisch dosiert und/oder kontinuierlich erfolgen. Das Zuführen kann mit einer Dosier- und/oder Zuführvorrichtung erfolgen. Die Dosier- und/oder Zuführvorrichtung kann eine gravimetrische oder volumetrische Dosierwaage aufweisen. Die Dosierwaage kann eine Bandwaage sein. Die Dosierwaage kann gravimetrisch oder volumetrisch betrieben sein. Dosier- und/oder Zuführvorrichtung und/oder die Dosierwaage kann dazu ausgebildet sein, den Stoffstrom, das Volumen und/oder das Gewicht zumindest eines Teils der Zusammensetzung und/oder dessen Bestandteile, insbesondere exakt, zu erfassen.

Die zugeführte Zusammensetzung bzw. die zugeführten Bestandteile der Zusammensetzung können mittels der Knetvorrichtung oder der Ein- oder Doppelschneckenknetmaschine oder des Mischers verarbeitet, beispielsweise geknetet und/oder aufgeschmolzen und/oder vermischt werden, um insbesondere eine Formmasse zu erzeugen. Die Formmasse kann zu einem Rohr extrudiert werden.

Ein Verfahren zur Herstellung von einem Rohr, insbesondere Kunststoffrohr, kann das Extrudieren von einer wie vorstehend und/oder nachfolgend beschriebenen Zusammensetzung umfassen. Das Verfahren kann auch die Schritte des vorstehend und/oder nachfolgend beschriebenen Verfahrens zur Herstellung der vorstehend und/oder nachfolgend beschriebenen Zusammensetzung umfassen.

Ein Verfahren zur Herstellung von einem wie vorstehend und/oder nachfolgend beschriebenen Rohr kann das Extrudieren von einer wie vorstehend und/oder nachfolgend beschriebenen Zusammensetzung umfassen. Das Verfahren kann auch die Schritte des vorstehend und/oder nachfolgend beschriebenen Verfahrens zur Herstellung der vorstehend und/oder nachfolgend beschriebenen Zusammensetzung umfassen.

Zusammenfassend und mit anderen Worten dargestellt ergibt sich somit durch die Erfindung unter anderem eine chemische Zusammensetzung eines TCP Liner-Rohres zur Erhöhung der Abriebbeständigkeit. Das Liner-Rohr, als mediumführendes Innenrohr des TCP, kann aus einer neuartigen Polymermischung bestehen bzw. diese aufweisen und/oder eine erhöhte Abriebfestigkeit aufweisen. Die Zusammensetzung dieser Polymermischung kann aus einem Polyethylen in hoher Dichte, insbesondere auf Basis eines 1-Hexen-Copolymers und bimodaler Molekulargewichtsverteilung, sowie einem PA66-modifizierten, ultrahochmolekularem Polyethylen, bestehen bzw. diese aufweisen. Die Zusammensetzung und/oder das PA66-modifizierte, ultrahochmolekulare Polyethylen kann als Tribologiemodifikator fungieren. Der Anteil des PA66-modifizierten, ultrahochmolekularem Polyethylen kann je nach Anforderung in Sachen Abrasionsresistenz zwischen 2 bis 10% betragen. Je nach Anforderung kann der Liner in der Ausführung als Vollwandrohr oder als co-extrudiertes, wie mehrlagiger oder 2-lagiger Liner, hergestellt sein und/oder werden. Im Fall einer mehrlagigen, wie 2-lagigen, Ausführung kann die Außenlage des Liner-Rohres aus einem bimodalen PE-HD (Polyethylen in hoher Dichte) bestehen und/oder dieses aufweisen.

Mit der Erfindung kann die Abriebfestigkeit, insbesondere der Innenwand eines Kunststoffrohrs, deutlich erhöht werden. Die Abrasionsresistenz kann signifikant verbessert werden. Der Reibungskoeffizient kann gesenkt werden. Der Liner eines TCP kann somit eine deutlich erhöhte Abriebfestigkeit aufweisen.

Nachfolgend werden Ausführungsbeispiele der Erfindung unter Bezugnahme auf Figuren näher beschrieben, dabei zeigen schematisch und beispielhaft:
- Fig. 1: ein thermoplastisches Kunststoffrohr im Querschnitt; und
- Fig. 2: ein Flussdiagramm eines Verfahrens zur Herstellung eines Rohrs.

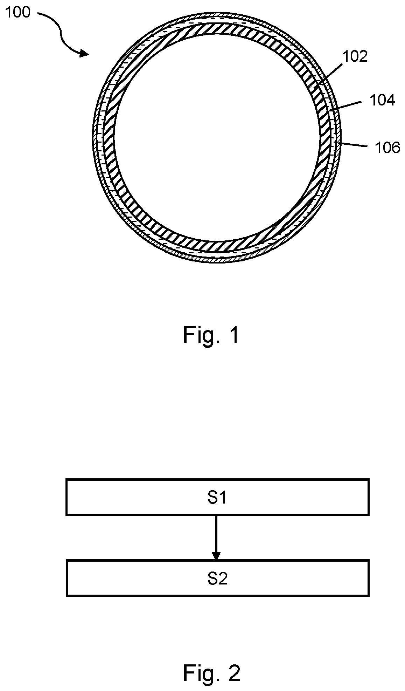

Fig. 1 zeigt im Querschnitt ein als Kompositrohr ausgebildetes thermoplastisches Kunststoffrohr 100. Das Kompositrohr 100 ist als ein flexibles, wickelbares und nichtmetallisches, thermoplastisches Verbundrohr ("thermoplastic composite pipe", TCP) ausgebildet. Das Kompositrohr 100 ist ein Mediumrohr zum Transport von flüssigen und/oder gasförmigen Medien, wie Öl, Gas oder Wasser.

Das Kompositrohr 100 weist ein Innenrohr 102, wie Liner oder Innenliner, auf, in dem das zu transportierende Medium geführt bzw. transportiert werden kann. Das Innenrohr 102 ist aus einem thermoplastischen Kunststoff hergestellt, beispielsweise extrudiert. Insbesondere weist das Innenrohr 102 eine Zusammensetzung, wie Kunststoffzusammensetzung, beispielsweise Polymermischung, auf bzw. ist daraus hergestellt, die zumindest ein Polyethylen mit hoher Dichte (HDPE) und zumindest ein Polyamid 66 (PA66) modifiziertes, ultrahochmolekulares Polyethylen umfasst. Das Polyethylen mit hoher Dichte basiert auf einem 1-Hexen Copolymer und bimodaler Molekulargewichtsverteilung. Die Zusammensetzung und/oder das Polyamid 66 modifizierte Polyethylen fungiert Tribologiemodifikator. Mittels der Zusammensetzung und/oder des Polyamid 66 modifizierten Polyethylens kann die Abriebfestigkeit deutlich erhöht und/oder die Abrasionsresistenz signifikant verbessert werden, insbesondere der Innenwand des Innenrohrs 102.

Das Kompositrohr 100 weist ferner eine um das Innenrohr 102 angeordnete Verstärkungsschicht 104 auf. Die Verstärkungsschicht 104 kann beispielsweise eine oder mehrere, wie zwei, Lagen aus verstärkendem Band umfassen, die mit Kunststoff imprägnierte, insbesondere unidirektional angeordnete, Fasern, beispielsweise Glasfasern und/oder Kunststofffasern und/oder Kohlefasern und/oder Aramidfasern, aufweisen. Die Lagen aus verstärkendem Band sind in unterschiedlichen Richtungen spiralförmig um das Innenrohr 102 herum angeordnet und mit diesem fest verbunden, wie verschweißt oder verklebt.

Das Kompositrohr 100 weist ferner einen aus Kunststoff hergestellten Schutzmantel 106 auf. Der Schutzmantel 106 ist um die Verstärkungsschicht 104 des Kompositrohr 100 herum angeordnet und mit dieser fest verbunden, wie verschweißt oder verklebt.

Fig. 2 zeigt schematisch ein Flussdiagramm eines Verfahrens zur Herstellung von einem Rohr, insbesondere Kunststoffrohr, wie ein Innenrohr 102 des Kompositrohrs 100.

In einem Schritt S1 wird eine Zusammensetzung, wie Kunststoffzusammensetzung, und/oder Bestandteile der Zusammensetzung jeweils einzeln oder zusammen einem Extruder, wie Einschneckenextruder oder Doppelschneckenextruder, zugeführt. Die Zusammensetzung umfasst zumindest ein Polyethylen mit hoher Dichte (HDPE) und zumindest ein Polyamid 66 (PA66) modifiziertes, ultrahochmolekulares Polyethylen. Das Polyethylen mit hoher Dichte basiert auf einem 1-Hexen Copolymer und bimodaler Molekulargewichtsverteilung.

In einem Schritt S2 wird die zugeführte Zusammensetzung bzw. die zugeführten Bestandteile der Zusammensetzung mittels des Extruders verarbeitet, insbesondere geknetet und/oder aufgeschmolzen und/oder vermischt. Durch ausstoßen und/oder auspressen der erzeugten Formmasse aus dem Extruder wird dann ein extrudiertes Rohr erzeugt.

Im Übrigen wird ergänzend insbesondere auf Fig. 1 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl aller Schritte des Verfahrens bzw. der Verfahren kann variiert werden.

### Bezugszeichen

- 100: Thermoplastisches Kunststoffrohr
- 102: Innenrohr
- 104: Verstärkungsschicht
- 106: Schutzmantel

- S1: Schritt zum Zuführen der Zusammensetzung
- S2: Schritt zum Verarbeiten der Zusammensetzung

## Patentansprüche

1. Zusammensetzung, insbesondere Kunststoffzusammensetzung, wie Polymermischung, umfassend zumindest ein Polyethylen mit hoher Dichte (HDPE) und zumindest ein Polyamid 66 (PA66) modifiziertes Polyethylen.

2. Zusammensetzung nach Anspruch 1, **dadurch gekennzeichnet, dass** das Polyethylen mit hoher Dichte auf einem 1-Hexen Copolymer und/oder bimodaler Molekulargewichtsverteilung basiert und/oder aufweist.

3. Zusammensetzung nach wenigstens einem der vorhergehenden Ansprüche, **dadurch gekennzeichnet, dass** das Polyamid 66 modifizierte Polyethylen ein ultrahochmolekulares Polyethylen ist.

4. Zusammensetzung nach wenigstens einem der vorhergehenden Ansprüche, **dadurch gekennzeichnet, dass** die Zusammensetzung 2 bis 10 %, wie Gewichts-%, oder 2 bis 10 Teile, wie Gewichtsteile, Polyamid 66 modifiziertes Polyethylen aufweist, insbesondere 3 bis 4 Gewichts-% oder 6 bis 7 Gewichts-% oder 9 bis 10 Gewichts-% oder 3 bis 4 Gewichtsteile oder 6 bis 7 Gewichtsteile oder 9 bis 10 Gewichtsteile Polyamid 66 modifiziertes Polyethylen aufweist.

5. Zusammensetzung nach wenigstens einem der vorhergehenden Ansprüche, **dadurch gekennzeichnet, dass** die Zusammensetzung und/oder das Polyethylen mit hoher Dichte eine Dichte von 0,93 bis 0,98 g/cm³ aufweist.

6. Verwendung von einer Zusammensetzung nach wenigstens einem der vorhergehenden Ansprüche zur Herstellung eines Rohrs (102), insbesondere Kunststoffrohrs (102), wie thermoplastisches Kunststoffrohr (100) oder thermoplastisches Verbundrohr (100).

7. Verwendung von einer Zusammensetzung nach wenigstens einem der vorhergehenden Ansprüche 1 bis 5 zur Herstellung eines Liners (102), wie Innenliner (102) oder Innenrohr (102), für ein thermoplastisches Verbundrohr (100) und/oder thermoplastisches Kompositrohr (100).

8. Rohr (102), insbesondere Kunststoffrohr (102), wie thermoplastisches Kunststoffrohr (102), umfassend eine Zusammensetzung nach wenigstens einem der vorhergehenden Ansprüche 1 bis 5.

9. Thermoplastisches Kunststoffrohr (100), wie thermoplastisches Verbundrohr (100) und/oder thermoplastisches Kompositrohr (100), umfassend ein Innenrohr (102), wie Liner (102) oder Innenliner (102), wobei das Innenrohr (102) aus einer Formmasse, wie Kunststoffformmasse, hergestellt, insbesondere extrudiert, ist, die eine Zusammensetzung nach wenigstens einem der vorhergehenden Ansprüche 1 bis 5 aufweist.

10. Thermoplastisches Kunststoffrohr (100) nach Anspruch 9, umfassend eine um das Innenrohr (102) herum angeordnete Verstärkungsschicht (104), wobei die Verstärkungsschicht (104) mindestens eine erste Lage aus verstärkendem Band, wie Faserband, aufweist, das im Wesentlichen spiralförmig in einer ersten spiralförmigen Richtung um das Innenrohr (102) gewickelt ist, und/oder die Verstärkungsschicht (104) mindestens eine zweite Lage aus verstärkendem Band, wie Faserband, aufweist, das im Wesentlichen spiralförmig um die erste Lage aus verstärkendem Band in einer zweiten spiralförmigen Richtung entgegen der ersten spiralförmigen Richtung gewickelt ist, und/oder wobei die erste Lage aus verstärkendem Band und/oder die zweite Lage aus verstärkendem Band ein verstärkendes Band umfasst, welches mit Kunststoff, wie Polyolefin, Polyethylen, Polyethylen mit hoher Dichte (HDPE), Polypropylen oder Polyamid, imprägnierte, insbesondere unidirektional angeordnete, Fasern, wie Glasfasern und/oder Kunststofffasern und/oder Kohlefasern und/oder Aramidfasern, aufweist.

11. Mehrschichtiges Rohr (102), insbesondere Kunststoffrohr (102), wie Liner (102) oder Innenliner (102), bei dem die radial außen liegende Schicht, wie Außenschicht oder Außenlage, ein Polyethylen mit hoher Dichte (HDPE), insbesondere ein bimodales Polyethylen mit hoher Dichte, aufweist und/oder daraus hergestellt, wie extrudiert, ist, und/oder die radial innen liegende Schicht, wie Innenschicht oder Innenlage, eine Zusammensetzung nach wenigstens einem der vorhergehenden Ansprüche 1 bis 5 aufweist und/oder daraus hergestellt, wie extrudiert, ist.

12. Rohr (100, 102) nach wenigstens einem der vorhergehenden Ansprüche 8 bis 11, **dadurch gekennzeichnet, dass** die Zusammensetzung und/oder das Polyamid 66 modifizierte Polyethylen als Tribologiemodifikator fungiert.

13. Verwendung des Rohrs (100, 102) nach wenigstens einem der vorhergehenden Ansprüche 8 bis 12 für den Transport von Öl, wie Rohöl, Gas, wie Rohgas, oder Wasser.

14. Verfahren zur Herstellung einer Zusammensetzung nach wenigstens einem der vorhergehenden Ansprüche 1 bis 5, wobei die Zusammensetzung und/oder die Bestandteile der Zusammensetzung einer Knetvorrichtung, insbesondere einem Extruder, wie Einschneckenextruder oder Doppelschneckenextruder, oder einer Ein- oder Doppelschneckenknetmaschine oder einem Mischer zugeführt (S1) werden und/oder wobei das Verfahren das Kneten, wie Schmelzkneten, der Zusammensetzung und/oder der Bestandteile der Zusammensetzung umfasst (S2).

15. Verfahren zur Herstellung von einem Rohr (100 102), insbesondere Kunststoffrohr (100, 102), oder von einem Rohr (100, 102) nach wenigstens einem der vorhergehenden Ansprüche 8 bis 12, wobei das Verfahren das Extrudieren von einer Zusammensetzung nach wenigstens einem der vorhergehenden Ansprüche 1 bis 5 umfasst (S2) und/oder das Verfahren nach Anspruch 14 umfasst.
